# EUROPÄISCHE PATENTSCHRIFT

(11) **EP 1 150 154 B1**
(45) Veröffentlichungstag und Bekanntmachung des Hinweises auf die Patenterteilung: **26.03.2003**
(21) Anmeldenummer: 01110318.1
(22) Anmeldetag: 26.04.2001
(51) Int. Cl.: G02B 21/08

(54) **Anordnung und Verfahren zur ringförmigen Beleuchtung, insbesondere zur Auflichtbeleuchtung bei Mikroskopen**
Device and method for annular illumination, especially for bright field illumination of microscopes
Procédé et méthode d'illumination annulaire, en particulier système d'illumination incident pour microscopes

(30) Priorität: 26.04.2000 DE 10020454; 23.06.2000 DE 10030772
(43) Veröffentlichungstag der Anmeldung: 31.10.2001
(73) Patentinhaber: COBRA electronic GmbH, 07745 Jena (DE)
(72) Erfinder: Kothmeier, Georg Emil, 85051 Ingolstadt (DE)
(74) Vertreter: Kruspig, Volkmar, Dipl.-Ing.

(56) Entgegenhaltungen:
- DE-A- 2 852 203
- DE-A- 4 016 264
- US-A- 4 893 223
- US-A- 5 038 258
- US-A- 5 690 417
- ANONYMOUS: "VIEWLINE:LED Beleuchtungen und Steuereinheiten" INTERNET ARTICLE, [Online] XP002174735 Gefunden im Internet: <URL:http://www.visitool.de/ViEWLiNE2000.h tm> [gefunden am 2001-08-13]
- ANONYMOUS: "SMT-LED-Leuchten" INTERNET ARTICLE, [Online] XP002174730 Gefunden im Internet: <URL:http://www.optometron.de/inhalt_smt_l ed.htm> [gefunden am 2001-08-13]
- ANONYMOUS: "LED Ringlight" PHOTONICS PRODUCTS, [Online] Juni 1999 (1999-06), XP002174736 Gefunden im Internet: <URL:http://www.photonics.com/Spectra/NewP rods/Jun99/nringl.html> [gefunden am 2001-08-13]

## Beschreibung

Die Erfindung betrifft eine Anordnung und ein Verfahren zur Beleuchtung, insbesondere Auflichtbeleuchtung bei Mikroskopen mit einem um die optische Achse orientierten Ringträger zur Aufnahme von Beleuchtungsmitteln, gemäß Oberbegriff des Patentanspruchs 1 bzw. 3.

Aus der deutschen Offenlegungsschrift DE 40 16 264 A1 ist ein Faseroptik-Ringlicht mit Fokussieroptik vorbekannt, welches insbesondere für mikroskopische Arbeitsplätze eingesetzt wird und wobei eine Vielzahl von jeweils einem Segment des Rings zugeordneten Fokussierungselementen vorgesehen ist und zur Schnittpunktveränderung der Teillichtbündel auf der optischen Achse die Fokussierungselemente und/oder die Enden von Lichtleitern radial verschiebbar gestaltet werden.

Mit der in der DE 40 16 264 A1 vorgestellten Lösung soll eine Schnittpunktveränderung der Teillichtbündel bezogen auf die optische Achse möglich werden, wobei die Fokussierungselemente beispielsweise kurze Zylinderlinsen sind oder aber auch Kugellinsen zur Anwendung kommen.

Die Konstruktion der radialen Verstellung der Fokussierungselemente ist jedoch außerordentlich aufwendig und unbefriedigend, wobei bedingt durch die Zuführung der Strahlungsenergie über Lichtleiter Verluste durch Streuung und im Lichtleitermaterial selbst innenwohnende Dämpfung nicht auszuschließen sind.

Bei der Vorrichtung zur Auflichtbeleuchtung nach DE 28 52 203 A1 wird von symmetrisch um die optische Achse eines abbildenden optischen Elements in einem ringförmigen Bereich angeordneten Lichtleiterendflächen ausgegangen, wobei der die Lichtleiterendflächen enthaltende, zur optischen Achse symmetrisch liegende ringförmige Bereich lichtemittierend und in der hinteren Brennebene und innerhalb des Aperturkegels des abbildenden Elements angeordnet ist. Der die Lichtleiterendflächen enthaltende ringförmige Bereich besteht aus mehreren konzentrischen, ringförmigen Teilbereichen, wobei zur steuerbaren Änderung der Breite des ringförmigen Bereichs den einzelnen Teilbereichen und diesen zugeordneten Lichtleitereingangsgruppen einzeln oder in beliebigen Kombinationen Licht zugeführt werden kann. Zum Zwecke eines steuerbaren Übergangs von Dunkelfeldbeleuchtung in Hellfeldbeleuchtung ist der ringförmige Bereich in Richtung der optischen Achse verschiebbar ausgeführt. Mit der Lehre nach DE 28 52 203 A1 soll eine preiswerte, an praktisch jedem vorhandenen Mikroskop auch nachträglich ohne großen Aufwand anbringbare Dunkelfeldbeleuchtung geschaffen werden, bei der eine Störung der Abbildungsgüte des Mikroskops und ein Auftreten von Hellfeldkomponenten nicht stattfindet. Neben der Möglichkeit, das gesamte Gesichtsfeld des Mikroskopobektivs extrem gleichmäßig auszuleuchten, besteht die Möglichkeit, einzelne, z.B. diametral gegenüberliegende Teile des lichtemittierenden ringförmigen Bereichs anzusteuern, so daß eine Dunkelfeldbeleuchtung mit nur aus einer, zwei oder mehreren Richtungen einfallender Strahlung erzeugt wird.

Konkret wird gemäß DE 28 52 203 A1 auf einen Kunststoffring zurückgegriffen, der mit einer entsprechenden Anzahl von ringförmig angeordneten Löchern versehen ist, in denen die einzelnen Lichtleiter befestigt werden. Die Lichtleiter sind in bestimmte Sektoren sowie in innere und äußere Ringsegmente unterteilt. Die Segmente können über geeignete, zu einer Gruppe zusammengefaßte Schalter in Verbindung mit einer Lichtquelle einzeln oder in Kombination angesteuert werden.

Die Konstruktion aus einer Vielzahl von Lichtleitern oder Lichtleiterbündeln, die darüber hinaus einzeln angesteuert werden, ist relativ großbauend und schwer als einfacher Nachrüstbausatz oder Nachrüstbaugruppe zu gestalten.

Von der Firma Optometron GmbH, München, sind SMT-LED-Beleuchtungen auch in Form von sogenannten Ringleuchten bekannt. Diese Ringleuchten können als Auflichtbeleuchtungsmittel eingesetzt werden, wobei die einzelnen lichtemittierenden Dioden auf steckbaren Leiterplatten angeordnet sind, um einen leichten Austausch defekter Elemente zu erreichen. Die Helligkeit solcher Ringleuchten kann von Hand oder über ein Vorschaltgerät geregelt werden.
Es hat sich jedoch gezeigt, daß derartige Ringleuchten durch die eingesetzten Dioden mit einem Abstrahlwinkel im Bereich von 120° keine optimale Ausleuchtung insbesondere beim Mikroskopieren ermöglichen. Insofern fanden bisher die für die Bildverarbeitszwecke eingesetzten Ringleuchten keinen Eingang in die Mikroskopiertechnik bzw. wurden für Mikroskop-Arbeitsplätze nicht in Betracht gezogen.

Weitere Vorrichtungen aus Auflichtbeleuchtung sind aus der Druckschriften US 5 690 417 A, US 5 038 258 A und US 4 893 223 A bekannt.

Aus dem Vorgenannten ist es daher Aufgabe der Erfindung, eine Anordnung und ein Verfahren zur Beleuchtung, insbesondere Auflichtbeleuchtung bei Mikroskopen nach Art einer Ringleuchte anzugeben, wobei über den gesamten, steuerbaren Helligkeitsbereich eine identische Farbtemperatur zu gewährleisten ist und die Strahlcharakteristik für Mikroskopierzwecke geeignet optimiert wird.

Die Lösung der Aufgabe der Erfindung erfolgt mit einer Anordnung gemäß den Merkmalen des Patentanspruchs 1 sowie mit einem Verfahren nach der Lehre nach Patentanspruch 3.
Der Anspruch 2 stellt eine zweckmäßige Ausgestaltung und Weiterbildung der Erfindung dar.

Der Grundgedanke der Erfindung besteht darin, von einem an sich bekannten Ringträger auszugehen, der um die optische Achse eines Mikroskops so positioniert wird, daß ein Objektträger mit Objekt ausreichend beleuchtet werden kann. Als Beleuchtungsmittel im Ringträger wird auf dort angeordnete lichtemittierende Halbleiterdioden (LED) zurückgegriffenen, wobei die Hauptstrahlrichtung der Halbleiterdioden zur optischen Achse des Systems hin gerichtet ist. Die Strahlcharakteristik der Dioden ist dabei wesentlich schmaler, als dies bei Dioden der Fall ist, die für Bildverarbeitungs-Ringleuchten eingesetzt werden.

Durch die eingesetzten LEDs ist die Wärmeentwicklung im Bereich des Objekts bzw. des Objektträgers minimiert und ein günstiger Wirkungsgrad gegeben, wobei die Farbtemperatur im Vergleich zu herkömmlichen Halogenlampen höhere Werte aufweist. Weiterhin bleibt die Farbtemperatur aufgrund der Eigenschaften der LEDs im gesamten Helligkeitsbereich, d.h. auch bei einer Veränderung der Helligkeitswerte gleich.

Im Ringträger sind mehrere konzentrische Ringreihen von Weißlicht-LEDs fixiert, wobei die LEDs in den Ringreihen im wesentlichen gleiche seitliche Abstände untereinander aufweisen.

Die Längsachsen der LEDs der jeweiligen Ringreihe sind derart zum Mittelpunkt der Anordnung geneigt, daß diese sich in einem Punkt auf oder in der Nähe der Systemachse kreuzen.

Die LEDs der Ringleuchte sind einzeln oder in Gruppen ansteuerbar und können darüber hinaus gruppenweise in der Helligkeit geregelt werden.

Bevorzugt werden zum Betreiben an üblicherweise vorhandenen 24 V Gleichspannungsquellen sechs LEDs in Gruppen in Serie geschaltet, wobei jeder Gruppe eine steuerbare Konstantstromquelle zugeordnet ist, welche mit je einem Ausgang eines Digital-Analog-Wandlers in Verbindung steht.

Dem Digital-Analog-Wandler wird ein digitales Steuersignal zum Betreiben der Konstantstromquellen und damit zur Helligkeitsregelung bzw. zur Ansteuerung der LEDs zugeführt.

Über das Betreiben der LEDs mittels Konstantstrom ist eine gleichmäßige Leuchtdichte und eine hohe Lebensdauer gewährleistet, wobei mittels des Microcontrollers eine segmentweise Ansteuerung der LED-Gruppen in einfacher Weise möglich ist. Darüber hinaus kann dem Microcontroller über eine Schnittstelle ein externes Signal zur Funktionsauslösung und -steuerung zugeführt werden.

Die eingesetzten Konstantstromquellen umfassen Operationsverstärker, welche auf einen Analogeingang eines im Microcontroller integrierten oder diesem zugeordneten Analog-Digital-Wandlers zu Kompensationszwecken rückgekoppelt sind.

Die Ansteuerung von einzelnen LED-Segmenten dient der Kontraststeigerung, indem z.B. eine einseitige Beleuchtung durch Auswahl entsprechender Segmente gewählt wird. Die Segmentgröße wiederum ist variabel wählbar und es besteht die Möglichkeit, eine Ansteuerung quasi dynamisch nach Art eines Lauflichts zu realisieren. Nicht genutzte Segmente können zur Vermeidung von Schattenbildung mit einer geringeren Helligkeit betrieben respektive angesteuert werden. Die Segmentbeleuchtung ist insbesondere bei spiegelnden und/oder strukturierten zu untersuchenden Oberflächen von Vorteil.

Bei dem erfindungsgemäßen Verfahren zur Auflichtbeleuchtung unter Rückgriff auf die vorbeschriebene Anordnung erfolgt je nach Beleuchtungs-Aufgabenstellung eine Ansteuerung von einer oder mehreren LED-Gruppen bzw. -Segmenten, wobei die Helligkeitswerte jeder Gruppe unterschiedlich, aber auch gleich vorgebbar sind. Über ein dynamisches Betreiben einzelner Segmente nacheinander durch eine entsprechend abgestimmte Steuerung ist eine sich bewegende oder rotierende Lichtquelle nachbildbar. Hierfür kann zum Freihalten der Hände des Experimentators ein Bedienungsfußschalter vorgesehen sein, mit welchem die Steuerung betätigt bzw. ausgelöst wird.

Alle zur Ansteuerung wesentlichen Elemente sind im Ringträger untergebracht bzw. dort integriert, wobei Bedienmittel ebenfalls am Ringträger befindlich sind. Die Bedienelemente ermöglichen ein Ein- und Ausschalten der Auflichtbeleuchtungs-Anordnung, eine Vorgabe von Helligkeitswerten sowie eine Auswahl von Segmenten bzw. eine Vorgabe von Segmentgrößen. Weiterhin ist am Ringträger bzw. Ringträgergehäuse eine Schnittstelle in Form geeigneter Steckverbinder vorgesehen, um ein externes, übergeordnetes Signal zur Funktionsauslösung und -steuerung zuzuführen.
Durch die beschriebene Möglichkeit einer programmgesteuerten Rotation von Segmenten, Gruppen oder LED-Feldern kann eine sich verändernde Licht-Schattenbildung realisiert werden, was für bestimmte Anwendungsfälle in der Mikroskopiertechnik von Vorteil ist.

Die Erfindung soll nachstehend anhand eines Ausführungsbeispiels sowie unter Zuhilfenahme von Figuren näher erläutert werden.

Hierbei zeigen:
- Fig. 1: eine Draufsicht auf den Ringträger mit erkennbaren konzentrischen Ringreihen von Weißlicht-LEDs;
- Fig. 2: eine Schnittdarstellung des Ringträgers mit zur optischen Achse des Systems geneigten LEDs;
- Fig. 3: eine Draufsicht auf den Ringträger mit einzeln aktivierten LED-Gruppen bzw. -Segmenten; und
- Fig. 4: ein Blockschaltbild der Ansteuerelektronik.

Die Anordnung gemäß Ausführungsbeispiel umfaßt einen Ringträger 1, welcher um die optische Achse 4 eines nicht gezeigten Mikroskops in der Nähe des Objektträgers bzw. des zu mikroskopierenden Objekts positioniert wird.

Der Ringträger weist im Inneren eine Leiterplatte bzw. einen Verdrahtungsträger auf, der der mechanischen Befestigung und elektrischen Kontaktierung einer Vielzahl von lichtemittierenden Dioden 2 dient.

Als lichtemittierende Dioden kommen vorzugsweise Weißlicht-Dioden mit einem relativ kleinen Abstrahlwinkel zum Einsatz. Zum Erreichen einer niedrigen Farbtemperatur im Bereich < 12000 Kelvin kann eine Diodenmischbestückung (Rot/Gelb/Orange und/oder Grün) vorgesehen sein.

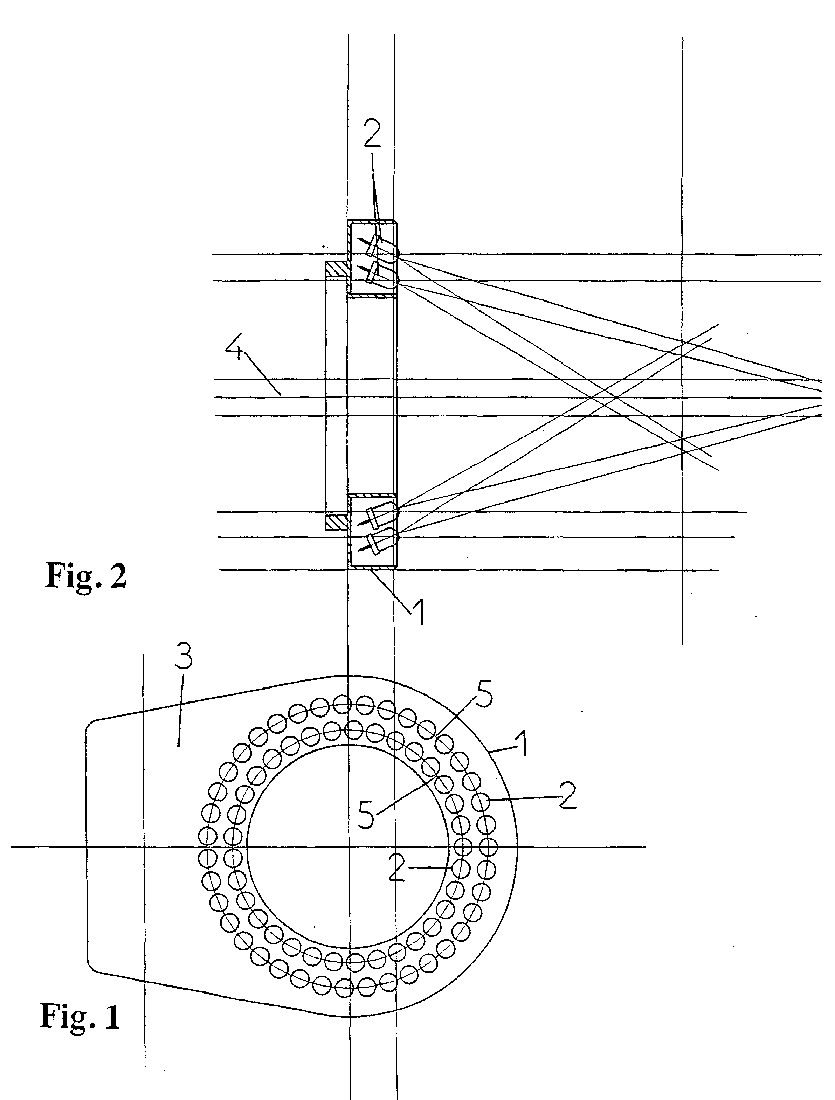

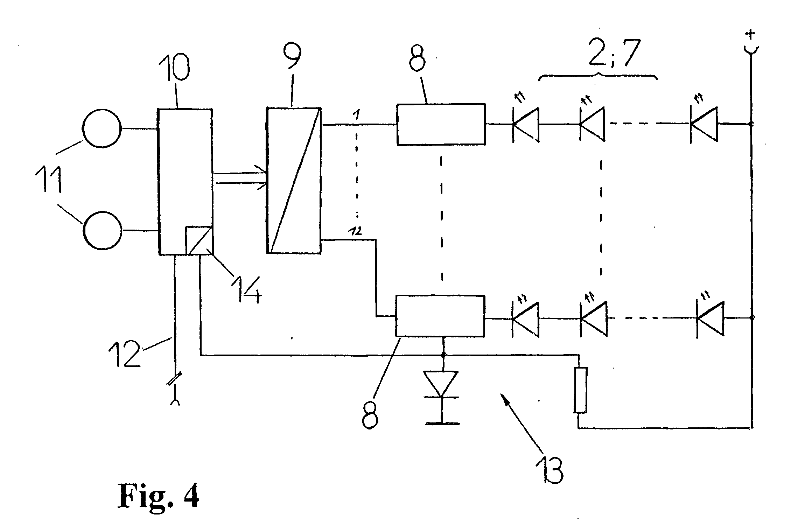

Im Gehäuseteil 3 des Ringträgers 1 ist eine Ansteuerelektronik befindlich, welche anhand der Fig. 4 noch näher beschrieben wird. Wie aus der Fig. 2 ersichtlich, sind die lichtemittierenden Dioden 2 so innerhalb des Ringträgers 1 befestigt, daß die Hauptstrahlrichtung der Dioden 2 zur optischen Achse 4 des Systems hin gerichtet respektive geneigt ist. Durch den Abstand der konzentrischen Ringreihen 5 von LEDs 2 und den Neigungswinkel ergibt sich ein relativ breiter Fokusbereich mit entsprechend optimierten Beleuchtungseigenschaften.

Beim gezeigten Beispiel sind zwei konzentrische Ringreihen 5 dargestellt, wobei auch mehrere Reihen je nach Mikroskopausbildung bzw. Beleuchtungsaufgabe denkbar sind.

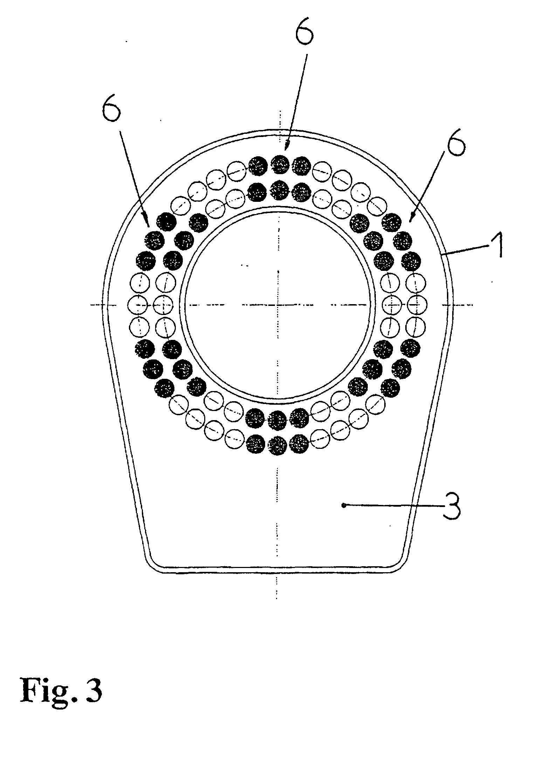

Fig. 3 illustriert die Ansteuerung von sechs ausgewählten LED-Gruppen bzw. Segmenten, wobei jedes Segment wiederum aus sechs benachbarten LEDs 2 besteht. Entsprechend der Grundverschaltung der LEDs 2 sind natürlich auch andere als die in der Fig. 3 gezeigten Segmente oder Gruppen 6 konfigurierbar.

Gemäß Blockschaltbild nach Fig. 4 wird beim Ausführungsbeispiel von einer Reihenschaltung von jeweils sechs LEDs ausgegangen, wobei insgesamt zwölf Kanäle, d.h. zwölf LED-Gruppen gebildet werden.

Jede Reihenschaltung 7 der LEDs 2 wird von einer steuerbaren Konstantstromquelle 8 getrieben. Die Eingänge der Konstantstromquellen 8 jedes Kanals liegen jeweils an einem Ausgang eines 8 Bit Digital-Analog-Wandlers 9. Die digitale Eingangsseite des Digital-Analog-Wandlers 9 steht mit einem Steuerausgang eines Microcontrollers 10 in Verbindung, welcher sowohl die Helligkeitssteuerung der LEDs 2 als auch eine Auswahl und Ansteuerung der Segmente bzw. Auswahl der Segmentgröße übernimmt. Hierfür sind entsprechende Bedien- und Stellmittel 11 vorhanden.

Weiterhin kann der Microcontroller 10 über eine Schnittstelle 12 verfügen, mit deren Hilfe ein übergeordnetes Signal zur Funktionsauslösung und -steuerung zugeführt werden kann.

Um einen Einsatz recht kostengünstiger Operationsverstärker für die Konstantstromquellen 8 zu ermöglichen, ist eine Rückkoppelschaltung 13 zur Kompensation vorgesehen, die auf einen Analogeingang eines Analog-Digital-Wandlers 14 führt, der Bestandteil des Microcontrollers 10 ist oder eine externe Baugruppe darstellt.

Mit Hilfe der vorgestellten Schaltung ist eine programmgesteuerte, einfache und intelligente Mikroprozessor-Regelung je nach Beleuchtungsaufgabe möglich, wobei die Ansteuerung von einer oder mehreren LED-Gruppen realisierbar ist und unterschiedliche Helligkeitswerte je Gruppe vorgegeben werden können. Weiterhin besteht die Möglichkeit, ein dynamisches Betreiben einzelner Segmente nacheinander im Sinne einer rotierenden oder sich quasi bewegenden Lichtquelle vorzunehmen, wodurch sich aufgrund der Rotation der Segmente eine abwechselnde Licht-Schattenbildung ergibt.

Alles in allem kann mit Hilfe der vorgestellten Anordnung in besonders einfacher und effektiver Weise eine Beleuchtung, insbesondere Auflichtbeleuchtung für Mikroskope realisiert werden, wobei die Anordnung einfach zu bedienen ist und über eine geringe Baugröße, eine wesentlich höhere Lebensdauer der Beleuchtungsmittel im Vergleich zu bisherigen Einrichtungen und eine intelligentere Lichtsteuerung verfügt.

### Bezugszeichenliste

- 1: Ringträger
- 2: LED
- 3: Gehäuseteil
- 4: optische Achse
- 5: konzentrische Ringreihen
- 6: Segmente/Gruppen
- 7: Reihenschaltung der LED
- 8: Konstantstromquelle
- 9: Digital-Analog-Wandler
- 10: Microcontroller
- 11: Bedien- bzw. Stellmittel
- 12: Schnittstelle
- 13: Rückkopplungsschaltung
- 14: Analog-Digital-Wandler

## Patentansprüche

1. Anordnung zur Beleuchtung, insbesondere Auflichtbeleuchtung bei Mikroskopen, mit einem um die optische Achse des Mikroskops orientierten, ebenen Ringträger (1) zur Aufnahme von Beleuchtungsmitteln, wobei die Beleuchtungsmittel in mehreren konzentrischen Ringreihen im Ringträger befindliche lichtemittierende Halbleiterdioden (LED) 2) mit kleinem Abstrahlwinkel sind und die Hauptstrahlrichtung der Halbleiterdioden zur optischen Achse (4) hin gerichtet ist, die LEDs (2) in den Ringreihen im wesentlichen gleiche seitliche Abstände untereinander aufweisen, wobei die LEDs (2) in Gruppen mittels Schaltkreis ansteuerbar und in der Helligkeit regelbar sind,
**dadurch gekennzeichnet, daß**
die LEDs (2) in den Gruppen in Serie geschaltet sind, wobei jeder Gruppe eine steuerbare Konstantstromquelle (8) zugeordnet ist, welche mit je einem Ausgang eines Digital-Analog-Wandlers (9) in Verbindung steht, weiterhin dem Digital-Analog-Wandler (9) ein digitales Steuersignal zum Treiben der Konstantstromquellen (8) zugeführt wird, wobei das digitale Steuersignal von einem Microcontroller (10) bereitgestellt ist, die Konstantstromquellen (8) Operationsverstärker umfassen, welche auf einen Analogeingang eines im Microcontroller (10) integrierten oder diesem zugeordneten Analog-Digital-Wandlers (14) zu Kompensationszwecken rückgekoppelt und die LED's (2) Weißlichtdioden sind.

2. Anordnung nach Anspruch 1,
**dadurch gekennzeichnet, daß**
dem Microcontroller (10) ein externes, übergeordnetes Signal zur Funktionsauslösung und -steuerung, einschließlich Helligkeitsvorgabe, über eine Schnittstelle (12) zuführbar ist.

3. Verfahren zur Auflichtbeleuchtung mit einer Anordnung nach Anspruch 1 oder 2,
**dadurch gekennzeichnet, daß**
je nach Beleuchtungs-Aufgabenstellung eine Ansteuerung von einer oder mehreren LED-Gruppen erfolgt, wobei die Helligkeitswerte jeder Gruppe unterschiedlich vorgebbar sind und über ein dynamisches Betreiben eine sich quasi bewegende oder rotierende Lichtquelle nachbildbar ist sowie weiterhin zur Vermeidung von Schattenbildungen bei spiegelnden und/oder strukturierten Oberflächen nicht beleuchtungsseitig genutzte Gruppen mit geringer Helligkeit angesteuert werden.

## Claims

1. An illumination arrangement, in particular vertical illumination in microscopes, comprising a planar ring carrier (1) oriented about the optical axis of the microscope and for receiving illumination means, said illumination means being small radiation angle light-emitting semiconductor diodes (LED 2) present in the ring carrier in a plurality of concentric ring rows, and the main radiation direction of the semiconductor diodes being directed towards the optical axis (4), the LEDs (2) in the ring rows have essentially identical lateral spacings between each other, with the LEDs (2) being drivable in groups by means of a switching circuit and being controllable in brightness,
**characterized in that**
the LEDs (2) in the groups are connected in series, with each group associated with an adjustable stabilized power supply (8), which is in connection in each case with an output of a D/A converter (9), and moreover, a digital control signal for driving the stabilized power supplies (8) is supplied to the D/A converter (9), with the digital control signal being provided by a microcontroller (10), the stabilized power supplies (8) comprising operational amplifiers, which, for compensation reasons, are fed back to an analog input of an A/D converter (14) integrated in the microcontroller (10) or associated to same, and the LEDs (2) are white light diodes.

2. Arrangement according to claim 1, **characterized in that** an external overriding signal for function driving and controlling, including default setting of the brightness, may be supplied to the microcontroller (10) via an interface.

3. Method of vertically illuminating with an arrangement according to claim 1 or 2, **characterized in that,** depending on the setting of the tasks for the illumination, a driving of one or several LED group/s takes place, with the brightness values of each group being differently pre-settable, and through a dynamic operation, a quasi moving or rotating light source may be reproduced, and, moreover, for avoiding shadow formations with reflecting and/or textured surfaces, groups which are not used on the illumination part, are driven at low brightness.

## Revendications

1. Agencement d'éclairage, en particulier éclairage incident pour microscopes, comportant un support annulaire (1) plan orienté autour de l'axe optique du microscope pour recevoir des moyens d'éclairage, les moyens d'éclairage étant des diodes électroluminescentes à semi-conducteurs (LED 2) avec petit angle de rayonnement, se trouvant dans plusieurs rangées annulaires concentriques dans le support annulaire et la direction de rayonnement principal des diodes à semi-conducteur étant dirigée vers l'axe optique (4), les diodes électroluminescentes (2) présentant dans les rangées annulaires des distances latérales sensiblement égales les unes par rapport aux autres, les diodes électroluminescentes (2) étant pilotables en groupes au moyen d'un circuit et leur luminosité étant réglable, **caractérisé en ce que** les diodes électroluminescentes (2) sont branchées en série dans les groupes, à chaque groupe étant associée une source de courant constant (8) commandable qui est en communication avec une sortie respective d'un convertisseur numérique-analogique (9), **en ce qu'**en outre un signal de commande numérique est amené au convertisseur numérique-analogique (9) pour exciter les sources de courant constant (8), le signal de commande numérique étant fourni par un micro-ordinateur (10), les sources de courant constant (8) comprenant des amplificateurs opérationnels qui sont couplés en réaction à une entrée analogique d'un convertisseur numérique-analogique (14) intégré dans le micro-contrôleur (10) ou associé à celui-ci dans des buts de compensation, et les diodes électroluminescentes (2) sont des diodes de lumière blanche.

2. Agencement selon la revendication 1, **caractérisé en ce qu'**un signal externe prioritaire peut être amené au microcontrôleur (10) via une interface (12) pour déclencher et commander le fonctionnement, y compris une luminosité prédéterminée.

3. Procédé d'éclairage incident avec un agencement selon l'une ou l'autre des revendications 1 et 2, **caractérisé en ce que** selon le problème d'éclairage, on procède à un pilotage d'un ou de plusieurs groupes de diodes électroluminescentes, les valeurs de luminosité de chaque groupe peuvent être prédéterminées de manière différente et une source lumineuse pratiquement en mouvement ou rotative est reproductible via un fonctionnement dynamique, et en outre, pour éviter des formations d'ombres en cas de surfaces réfléchissantes et/ou structurées, des groupes non utilisés côté éclairage sont pilotés avec une faible luminosité.
